# EUROPÄISCHE PATENTSCHRIFT

(11) **EP 1 230 480 B1**
(45) Veröffentlichungstag und Bekanntmachung des Hinweises auf die Patenterteilung: **27.07.2005**
(21) Anmeldenummer: 00987094.0
(22) Anmeldetag: 08.11.2000
(51) Int. Cl.: F03D 9/00, F03D 5/00, H01L 31/042

(54) **HYBRIDE ANLAGE FÜR DIE NUTZUNG VON WIND- UND SOLARENERGIE**
HYBRID SYSTEM THAT UTILIZES WIND AND SOLAR ENERGY
INSTALLATION HYBRIDE POUR EXPLOITER L'ENERGIE SOLAIRE ET EOLIENNE

(30) Priorität: 09.11.1999 DE 19953632
(43) Veröffentlichungstag der Anmeldung: 14.08.2002
(73) Patentinhaber: Gerhardt, Thomas, 19406 Sternberg (DE)
(72) Erfinder: Gerhardt, Thomas, 19406 Sternberg (DE)
(86) Internationale Anmeldenummer: PCT/DE2000/003901
(87) Internationale Veröffentlichungsnummer: WO 2001/034976

(56) Entgegenhaltungen:
- DE-A- 3 017 987
- DE-A- 19 831 692
- US-A- 4 536 674
- PATENT ABSTRACTS OF JAPAN vol. 1999, no. 11, 30. September 1999 (1999-09-30) & JP 11 168228 A (FUJITA YASUHIRO), 22. Juni 1999 (1999-06-22)

## Beschreibung

Die Erfindung betrifft eine hybride Anlage für die Nutzung von Windkraft und Solarenergie noch dem Oberbegriff des Anspruches 1.
Solche Anlagen werden alternativ zur Gewinnung elektrischer Energie eingesetzt.

Bekannt sind Windkraftanlagen, die dann unzureichend arbeiten, wenn kein ausreichender Wind vorhanden ist und es sind Solaranlagen (JP 11 168 228 A) bekannt, deren Effektivität im wesentlichen vom Stand der Sonne bestimmt werden.

Zum Ausgleich dieser Nachteile wurden hybride Energieanlagen entwickelt, wie sie beispielsweise in der DE 296 21 822 U1 und in der DE 296 07 243 U1 beschrieben sind. Solche Anlagen bestehen aus den üblichen rotierenden Windkraftanlagen, an dessen Gestellkonstruktionen großflächige Solarmodule befestigt und elektrotechnisch integriert sind. Diese großflächi-gen Solarmodule bestehen aus einer Vielzahl von einzelnen und miteinander verknüpften Solarzellen.
Zunächst lassen sich solche Anlagen aufgrund ihren Dimensionen gestalterisch nur mangelhaft in die Landschaft oder gar in Wohngebiete integrieren. Ein wesentlicher Nachteil solcher Anlagen besteht auch darin, daß großflächige Sofamwdule eine hohe Windlast erzeugen, die vom tragen-den Gestell der Anlage aufgebracht werden muß. Das führt zu noch aufwendigeren Konstruktionen.
Außerdem ist es aus Kostengründen unvertretbar, die Solarmodule am Mast einer Windkraftanlage zu montieren, nur um eine hybride Energieanlage zu erhalten. Die Montagehöhe der Solarmodule spielt für die Energiegewinnung keine Rolle, d. h. sie können eben so gut auf dem Boden installiert werden.
Dazu kommt, daß die Herstellung von Solarmodulen sehr kosten- und abfallintensiv ist, da die einzelnen Solarzellen paßgerecht zugeschnitten werden müssen, bevor sie zu Solarmodulen angeordnet und elektrisch verschaltet werden.

Da die elektrische Verschaltung und damit die Leistungscharakteristik eines solchen Solarmoduls unabänderlich vorgegeben ist, ist auch eine optimale Ausnutzung der einzelnen Solarzelle unmöglich. Weiterhin kommt es aufgrund der großflächigen und kompakten Bauweise der Solarmodule zu einer starken Erwärmung der Solarzellen, was entweder eine Kühlung erforderlich macht oder anderenfalls zu geringeren Wirkungsgraden führt.

Es sind zwar auch kleinere Anlagen dieser Art bekannt, wie zum Beispiel Anlagen zur Stromversorgung von Notrufsäulen im Straßenverkehr, die das landschaftliche Erscheinungsbild nicht so sehr negativ beeinflussen, die aber nicht ausreichend leistungsstark sind.

Aus der DE 297 17 984 U1 ist nun eine Wind-Solar-Generatoranlage beschrieben, bei der Solarmodule auf den Rotorflächen des Windanlagenteils befestigt sind. Dadurch wird die erforderliche Solarfläche auf mehrere kleinere Solarmodule verteilt und ihr Standort vom feststehenden auf den drehenden Anlagenteil verlegt. Das ist von Vorteil für die statische Auslegung der Energieanlage.
Allerdings bleibt der Nachteil aller Windkraftanlagen erhalten, der darin besteht, daß auf Grund der ständigen Rotation und der relativ großen Massen der sich drehenden Teile hohe Reibungsverluste auftreten, die den
Wirkungsgrad erheblich herabsetzen. Dieser generelle Nachteil wird noch dadurch verstärkt, daß die Solarmodule die Masse der Rotorflügel erhöhen und zu erhöhtem Reibungsverlust führen. Dazu kommt, daß die Einstellung der optimalen Anströmwinkel auf die Rotorblätter, relativ zum Wechsel der Windrichtung, nicht oder nur sehr träge erfolgen kann. Auch ist die Gesamtfläche aller Solarmodule durch die Anzahl und die Größe der Rotorflügel vorgegeben und damit begrenzt. Das schränkt die Anpassungsfähigkeit an spezielle Anwendungsfälle stark ein.
Auch ist der Aufwand für die Herstellung der auf den Rotorflügeln befindlichen Solarmodule sehr hoch.

Der Erfindung liegt daher die Aufgabe zugrunde, die Windflügelelemente und damit die Solarzellen bei einer gattungsgemäßen hybriden Anlage optimal zu verkleinern und dabei der Wirkungsgrad des Windanlagenteils und des Solaranlagenteils zu erhöhen.

Die Aufgabe wird durch die kennzeichnenden Merkmale des Anspruches 1 gelöst. Zweckdienliche Ausgestaltungen ergeben sich aus den Ansprüchen 2 bis 5.

Mit der Erfindung werden die genannten Nachteile des Standes der Technik beseitigt.

Der besondere Vorteil der Erfindung liegt aber darin, daß die einzelnen Solarzellen elektrisch nicht zu starren Modulen verbunden sind.
Dadurch ist es möglich, durch ein entsprechendes Abtastprogramm, die elektrisch optimalen Leistungscharakteristiken der einzelnen Solarzellen zu kombinieren. Dies ist für eine Optimierung der Energieausbeute nötig, da die Anlage ein lichtdurchflutetes Objekt darstellt und der sich ändernde Stand der Sonne und die Bewegung der Solarzellen im Wind die Bestrahlung bzw. Abschattung der einzelnen Solarzellen beeinflussen. Es werden durch dynamische Zusammenschaltungen der jeweils gleichen Energieniveaus von Solarzellen, nach dem elektrischen Leistungsprinzip serielle, parallele oder kombinierte Verschaltungen von Solarzellen realisiert. Die sich hieraus ergebende Vielfalt strom- bzw. spannungsdominierender Schaltungen ermöglichen den Einsatz eines Solarinverters zur Netzeinspeisung. Damit entfällt die Zwischenspeicherung in Akkus, wodurch der Gebrauchswert wesentlich erhöht wird.
Die von den Piezokristall-Wandlern erzeugten sporadischen Spannungen werden in geeigneter Weise, zum Beispiel durch Pufferkondensatoren, in einer Wechselrichterschaltung oder durch Impulstransformatoren in verwertbare Elektroenergie umgewandelt.
Da jede nur denkbare, in die Piezokristalle eingebrachte Biegung, Torsion usw. zu elektrischen Spannungen führt, ist die Windenergieumwandlung auch bei ständig wechselnden Windrichtungen gegeben.
Es ist aus Kostengründen zweckmäßig, die Piezokristall-Wandler nicht direkt in die Astelemente zu verpflanzen, sondern in zusammensteckbare Kupplungselemente einzuordnen. Dadurch kann die für eine große relative Verformung verantwortliche, unterschiedliche Materialbeschaffenheit sehr einfach verwirklicht werden. Diese Kupplungsart ermöglicht auch sehr einfach, im Kronengeäst ein Netz von vielen solchen Kupplungselementen einzurichten, was sich vorteilhaft auf die Effektivität der Anlage auswirkt.
Da auch in vorteilhafter Weise die Stammelemente und die Pfahlelemente zusammensteckbar ausgeführt sind, kann eine solche Anlage zur Energiegewinnung auf jeden energetischen Bedarf aber auch an jede gestalterische Anforderung eingestellt werden.
Sehr vorteilhaft ist auch die Ausführung der Windsolarelemente in Form von Dünnschichtsolarzellen oder Solarfolien. Die sind leicht und flexibel wie Blätter und auch nicht so leicht erhitzbar, weil sie jederzeit und leicht von jedem kleinen Windzug gekühlt werden.

Die Erfindung soll anhand eines Ausführungsbeispieles näher erläutert werden.

Dazu zeigen:

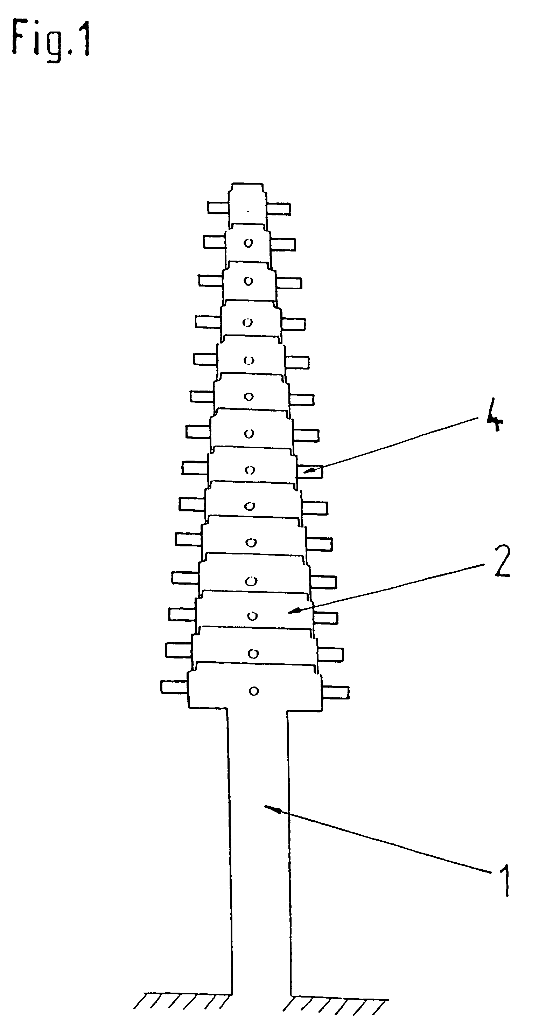

- Fig. 1:: Stamm mit Kronenelementen,
- Fig. 2:: ein Kronenelement in zwei Ansichten,
- Fig. 3:: einen Teilausschnitt der Astelemente mit den entsprechenden Kupplungselementen, sowie die Anordnung zum Kronenelement,
- Fig. 4:: ein Kupplungselement in drei Ansichten,
- Fig. 5:: ein Leistungsdiagramm von drei Windsolarelementen.

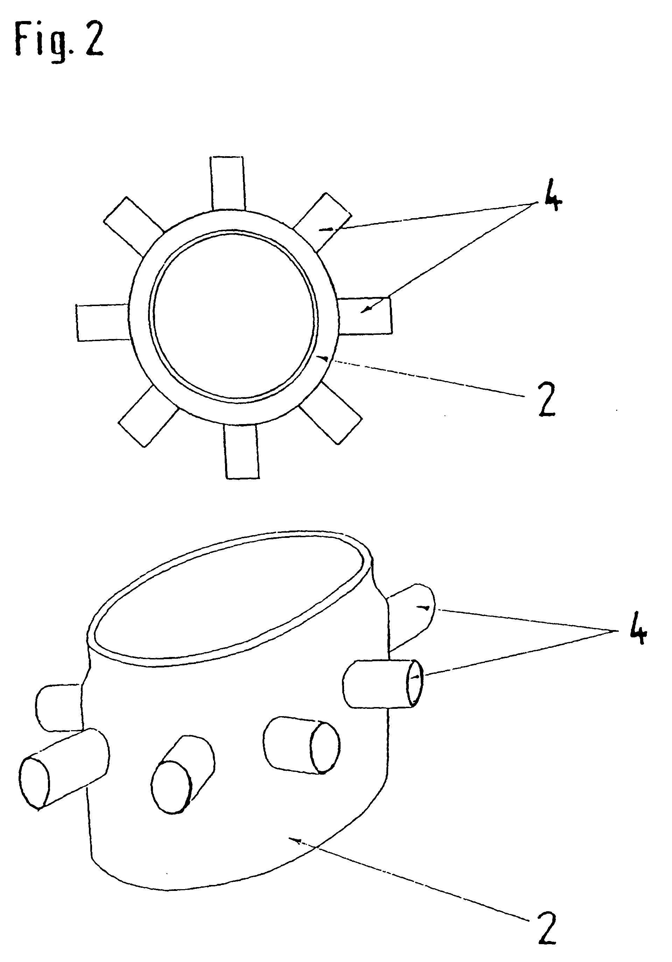

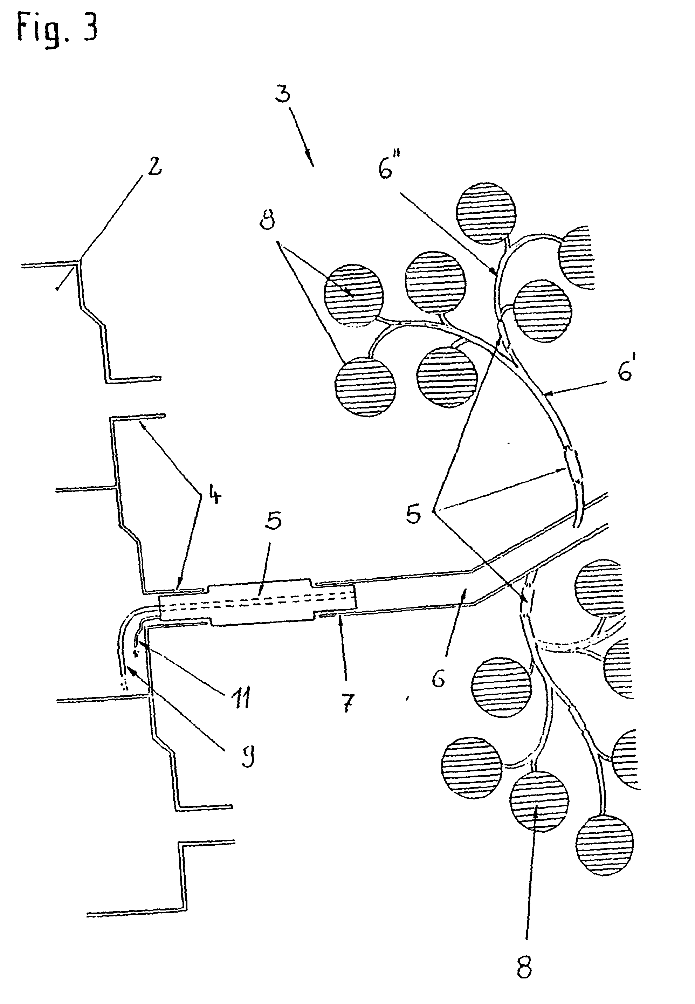

Die hybride Anlage für die Nutzung von Wind- und Solarenergie ist in seiner Gestalt in etwa vergleichbar mit der Gestalt eines Baumes und besteht daher aus einem
Stamm 1 und einer Krone, bestehend aus Kronenelementen 2 und Kronengeäst 3. Das Kronengeäst 3 ist über Kupplungen 4 mit dem Kronenelement 2 verbindbar ausgeführt. Die Fig. 2 zeigt ein Kronenelement 2 mit mehreren Kupplungen 4, die in einer losen oder in einer strengen Ordnung am Umfang des Kronenelements 2 verteilt angeordnet sind.
Gemäß der Fig. 3 ist in jeder der Kupplungen 4 ein flexibles Kupplungselement 5 eingesetzt, das auf der stammabgewandten Seite mit einem Astelement 6 erster Ordnung verbunden ist. Dazu ist das Astelement 6 ebenfalls mit einer Kupplung 7 ausgestattet. In Anlehnung an die Baumgestaltung schließen sich dem Astelement 6 weitere Astelemente 6' zweiter Ordnung und Astelemente 6" dritter und weiterer Ordnungen an. In diesen Astelementen 6, 6',6" sind an bevorzugten Stellen weitere Kupplungselemente 5 in der gleichen Art und Weise eingesetzt.

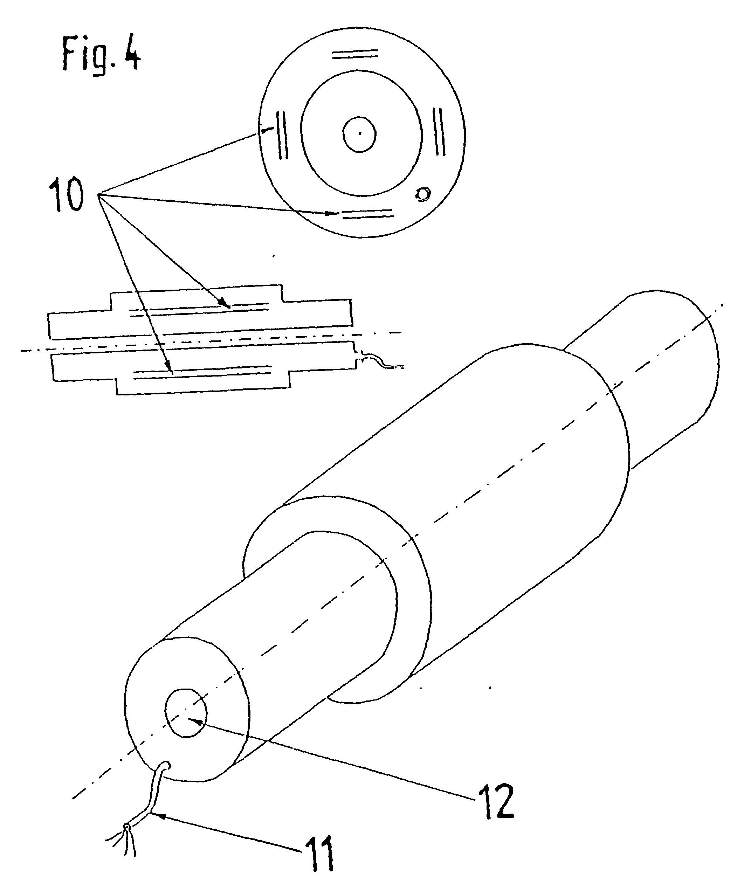

Im gesamten Kronengeäst 3 sind in vielfacher Zahl blätterartige Windsolarelemente 8 befestigt, die als Solarzellen in Form von Dünnschichtsolarzellen oder Solarfolien ausgebildet sind und damit auch eine blattartige Flexibilität aufweisen. Damit ist jedes Windsolarelement 8 zur Aufnahme von Windlasten und zur Aufnahme von Solarenergie ausgelegt.
Jedes Windsolarelement 8 ist über eine Anschlußleitung 9 mit einem nichtdargestellten Rechner verbunden, der nach einem Programm jeder der Windsolarelemente 8 in kurzer Taktfolge abtastet, alle zeitgleich ermittelten Solarenergiewerte miteinander vergleicht und die Windsolarelemente 8 mit gleichen Energieniveau miteinander verknüpft.
Den Aufbau des Kupplungselementes 5 zeigt die Fig. 4. Danach sind radial gleichmäßig verteilt Piezokristall-Wandler 10 in das flexible Kupplungsmaterial eingegossen, die dann über Anschlußleitungen 11 mit einer nicht dargestellten Elektronik verbunden sind. Zur Verbindung der Windsolarelemente 8 mit der entsprechenden Elektronik sind alle Kupplungselemente
5 mit einem Kabelführungskanal 12 ausgerüstet.
Der Stamm 1 und die Krone mit allen ihren Elementen ist vorzugsweise aus einem Kunststoff gefertigt, wobei die Materialbeschaffenheit in dem Bereich, wo die Piezokristall-Wandler 10 eingesetzt sind, eine größere Flexibilität aufweist, wie die Materialbeschaffenheit in den übrigen Bereichen.
Am zweckmäßigsten ist es, wenn die Flexibilität der im Standortbereich der Piezokristall-Wandler 10 nur so groß ist, daß das Eigengewicht der verbundenen Elemente getragen wird und die übrigen Elemente starr ausgeführt sind. Damit wird die größte mechanische Verformung auf die Piezokristall-Wandler 10 gelenkt, die die auftretende Bewegungsenergie in elektrische Spannung umwandeln.

Im Folgenden soll die Funktionsweise der Anlage näher erläutert werden.
Die Vielzahl der Windsolarelemente 8 sind im einzelnen mehr oder weniger dem Wind und der Sonne ausgesetzt, wobei sich die einzelnen Windsolarelemente 8 in sich unterscheidender Ausrichtung zur Sonne und zum Wind befinden und auch teilweise oder völlig von anderen Windsolarelementen 8 verdeckt sind.

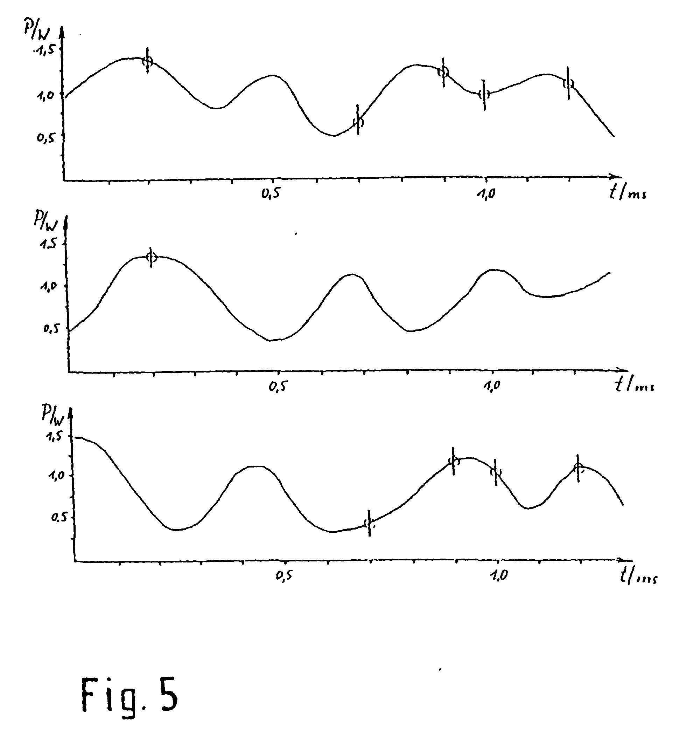

Dem entsprechend liefern einzelne Windsolarelemente 8 unterschiedliche Solarenergiewerte. Diese Solarenergiewerte ändern sich obendrein ständig durch den sich verändernden Stand der Sonne und durch die ständigen vom Wind hervorgerufenen Richtungsänderungen der Windsolarelemente 8.
Die Vielzahl der einzelnen und unterschiedlichen Spannungs- und Stromwerte werden in kurzer Taktfolge einem Rechner zugeführt, der alle diese Werte erfaßt und miteinander vergleicht. Ein ausgewähltes Leistungsdiagramm zeigt die Fig. 5, wonach jedes Windsolarelement 8 unterschiedliche Solarenergiewerte bezogen auf einen bestimmten zeitlichen Moment aufweist. Im Vergleich aller ermittelten momentanen Solarenergiewerte ordnet der Rechner die Windsolarelemente 8 nach übereinstimmenden Solarenergiewerten und verknüpft gleiche Werte aufweisende Windsolarelemente 8. Wegen der sich ständig ändernden Bedingungen und den damit verbundenen Änderungen der Solarenergiewerte aller Windsolarelemente 8, ist die Koordination und Zusammenschaltung der passenden Windsolaretemente 8 ein ständiger und dynamischer Prozeß. Damit können serielle, parallele oder kombinierte Modulketten gebildet werden.
Fig. 5 zeigt zur Darstellung des Prinzips der Abtastung des Leistungsniveaus der Windsolarelemente 8 drei verschiedene Leistungskurven von Windsolarelementen 8.
Die Verschiedenheit des Leistungsniveaus der Windsolarelemente 8 beruht, wie schon beschrieben, auf der unterschiedlichen Ausrichtung zur Sonne, hervorgerufen durch Windbewegungen, die zu Abschattungen führen können.
Die Abtastung basiert auf dem Prinzip des Sampling-Verfahrens, wobei schnelle A/D Converter entsprechend der Samplingfrequenz und der Quantisierungsstufen die einzelnen Leistungskurven abtastet und digitalisiert.
Diese Daten werden einem Prozessor zugeführt, der durch Vergleich und Zuordnung im Moment der Abtastung die Windsolarelemente 8 nach Maßgaben der Leistungsoptimierung verknüpft.
Die Grafik in der Fig. 5 zeigt drei Leistungskurven, von unterschiedlichen Windsolarelementen 8 über einen bestimmten Abtastzeitraum. Dabei lassen die Markierungen in den drei Leistungskurven erkennen, daß während der Abtastung gleiche Energieniveaus auf den unterschiedlichen Leistungskurven auftreten. Im Vergleich aller ermittelten momentanen Solarenergiewerte ordnet der Rechner die Windsolarelemente 8 nach übereinstimmenden Solarenergiewerten und verknüpft gleiche Solarenergiewerte aufweisende Windsolarelemente 8. Dieses im Vielfach von ein paar Tausend Solarzellen und einer entsprechenden Taktrate gibt die Gewähr der Optimierung über das gesamte Leistungsspektrum der eingesetzten Windsolarelemente 8.
Die gleichen Windsolarelemente 8 werden aber auch vom Wind belastet und geben dieser Last nach. Die daraus entstehenden Bewegungen der W indsolarelemente 8 übertragen sich auf die betreffenden Astelemente 6, 6', 6" bis letztendlich auf die Kupplungselemente 5. Auf Grund der flexiblen Materialbeschaffenheit der Astelemente 6, 6', 6" in den Bereichen, wo die Piezokristall-Wandler 10 positioniert sind, treten hier die größten Biegespannungen und damit die größten Verformungen auf. Nach dem Ausführungsbeispiel trifft das auf die Kupplungselemente 5 zu.
Die Verformungen werden auf die Piezokristall-Wandlern 10 übertragen, die daraufhin elektrische Spannungen erzeugen. Diese Spannungen treten nur sporadisch auf und müssen deshalb durch Pufferkondensatoren in einer Wechselrichterschaltung oder durch Impulstransformatoren in verwertbare Elektroenergie umgewandelt werden, bevor sie durch die rechnergestützte Verschaltungselektronik weiter verarbeitet werden können und sich zur Elektroenergie der Solarzellen addieren.
Dabei erfolgt die Koordinierung der beiden Energiearten aus der Windkraft und der Sonne durch ein rechnergestütztes Programm, das den Gesetzen der FUZZY-LOGIC folgt.

### Aufstellung der Bezugszeichen

- 1: Stamm
- 2: Kronenelement
- 3: Kronengeäst
- 4: Kupplung (Kronenelement)
- 5: Kupplungselement
- 6: Astelement
- 7: Kupplung (Astelement)
- 8: Windsolarelement
- 9: Anschschlußleitung (Solar)
- 10: Piezokristall-Wandler
- 11: Anschlußleitung (Piezo)
- 12: Kabelführungskanal

## Patentansprüche

1. Hybride Anlage für die Nutzung von Wind- und Solarenergie, bestehend aus einem gemeinsamen Gestell mit mehreren tragenden Astelementen (6, 6', 6") und mehreren getragenen Windsolarelementen (8), wobei die tragenden Astelemente (6, 6', 6") mit mehreren schaltungstechnisch miteinander verknüpften Piezokristall-Wandler (10) ausgestattet sind und die getragenen Windsolarelemente (8) so ausgelegt sind, dass sie ein Biege- und/oder Drehmoment auf ausgewählte Bereiche der Astelemente (6, 6', 6") ausüben und glcichzeitig als Träger von miteinander verknüpften Solarzellen ausgebildet sind.
**dadurch gekennzeichnet, dass**
- die Astelemente (6. 6'. 6'') in Astelemente erster Ordnung (6), zweiter Ordnung (6') und weiterer Ordnungen (6") verzweigt und die Astelemente (6, 6', 6") jeder Ordnung mit einem Piezokristall-Wandler (10) ausgestattet sind und
- die auf den Windsolarelementen (8) befindlichen Solarzellen mit einem Rechner verbunden sind, der nach einem Programm jede Solarzelle in kurzer Taktfolge abtastet, alle zeitgleich ermittelten Werte miteinander vergleicht und Solarzellen mit gleichem Energieniveau verknüpft.

2. Hybride Anlage nach Anspruch 1.
**dadurch gekennzeichnet, dass** die Astelemente (6, 6', 6") durch Kupplungselemente (5) zusammensteckbar ausgeführt sind und die Piezokristall-Wandler (10) in die Kupplungselemente (5) eingebunden sind.

3. Hybride Anlage nach Anspruch 2,
**dadurch gekennzeichnet, dass** zur Abführung der Anschlussleitung (11) für die Piezokristall-Wandler (10) und der Anschlussleitung (9) für die Windsolarelemente (8) die Kronenelemente (2), die Kupplungselemente (5) und die Astelemente (6, 6', 6") mit einem Kabelführungskanal (12) ausgerüstet sind.

4. Hybride Anlage nach Anspruch 1,
**dadurch gekennzeichnet, dass** die Windsolarelemente (8) aus je einer Dünnschichtsolarzelle oder einer Solarfolie bestehen.

## Claims

1. Hybrid system for using wind and solar energy, consisting of a joint frame with several supporting branch elements (6, 6', 6") and several supported wind solar elements (8), whereby the supporting branch elements (6, 6', 6") are fitted with several piezo-crystal converters (10) linked by switches and the supported wind solar elements (8) are designed so that they exercise a bending and/or torque on select areas of the branch elements (6, 6', 6") and at the same time are designed as bearers of solar cells linked with each other.
**marked by the fact** that
- the branch elements (6, 6', 6") are branched in branch elements of the first order (6), second order (6') and further orders (6") are branched and the branch elements (6, 6', 6") of each order are fitted with a piezo-crystal converter (10) and
- the solar cells located on the wind solar elements (8) are connected with a computer, which according to a programme scans each solar cell in a short cycle sequence, compares all values determined simultaneously and links solar cells with the same energy level.

2. Hybrid system according to claim 1.
**marked by the fact** that the branch elements (6, 6', 6") are designed so that they can be assembled through coupling elements (5) and the piezo-crystal converters (10) are integrated into the coupling elements (5).

3. Hybrid system according to claim 2.
**marked by the fact** that the crown elements (2), the coupling elements (5) and the branch elements (6, 6', 6") are fitted with a cable duct (12) to lead away the connection line (11) for the piezo-crystal converter (10) and the connection line (9) for the wind solar elements (8).

4. Hybrid system according to claim 1,
**marked by the fact** that the wind solar elements (8) consist of one thin layer solar cell or a solar film each.

## Revendications

1. Installation hydride pour l'exploitation d'énergie éolienne et solaire, se composant d'un bâti commun avec plusieurs éléments à branches portants (6, 6', 6") et plusieurs éléments portés éoliens et solaires (8), dont les éléments à branches portants (6, 6', 6") sont équipés de plusieurs convertisseurs à cristal piézoélectrique (10) liés les uns aux autres du point de vue commutation. Les éléments portés éoliens et solaires (8) sont conçus en sorte à ce qu'ils exercent un moment de flexion et/ou de torsion sur des domaines choisis des éléments à branches (6, 6', 6") tout en étant conçu en tant que porteur de cellules solaires liées les unes aux autres,
**caractérisée par le fait que**
- les éléments à branches (6, 6', 6") sont ramifiés en éléments à branches de premier ordre (6), de deuxième ordre (6') et d'autres ordres (6") et que les éléments à branches (6, 6', 6") de tout ordre sont équipés d'un convertisseur à cristal piézoélectrique (10) et
- les cellules solaires qui se trouvent sur les éléments éoliens et solaires (8) sont liées à un ordinateur qui balaye chaque cellule solaire selon un programme en courte séquence d'impulsions et compare toutes les valeurs déterminées de manière isochrone et lie les cellules solaires de même niveau d'énergie.

2. Installation hybride selon exigence 1,
**caractérisée par le fait que** les éléments à branches portants (6, 6', 6") sont enfichables moyennant des éléments d'accouplement (5) et que les convertisseurs à cristal piézoélectrique (10) sont intégrés dans les éléments d'accouplement (5).

3. Installation hybride selon exigence 2,
**caractérisée par le fait que** pour sortie de la ligne de raccordement (11) pour les convertisseurs à cristal piézoélectrique (10) et la ligne de raccordement (9) pour les éléments éoliens et solaires (8), éléments de couronne (2), éléments d'accouplement (5) et les éléments à branches (6, 6', 6") sont équipés d'un canal de câbles.

4. Installation hybride selon exigence 1,
**caractérisée par le fait que** les éléments éoliens et solaires (8) se composent chacun d'une cellule solaire en couche mince ou d'un film solaire.
